# EUROPEAN PATENT APPLICATION

(11) **EP 4 818 493 A1**
(43) Date of publication of application: **07.10.2026**
(21) Application number: 26161980.3
(22) Date of filing: 03.03.2026
(51) Int. Cl.: F02C 7/18, F02C 6/08

(54) **GAS TURBINE ENGINE COMPRISING AN EJECTOR**

(30) Priority: 03.04.2025 GB 202505014
(71) Applicant: Rolls-Royce plc, London N1 9FX (GB)
(72) Inventor: Hussain, Zahid M, Derby, DE24 8BJ (GB)
(74) Representative: Rolls-Royce plc

(57) **Abstract**

There is provided a gas turbine engine (10) comprising: a bypass duct (22), a compressor stage (14, 15), a cooling duct (61, 62) and an ejector (52). The cooling duct (61, 62) has an inlet (71) which opens into the bypass duct (22). The ejector (52) extends continuously through the cooling duct (61, 62) along an extension direction (204). The ejector (52) includes an aperture (53) and an aerodynamic structure (900). The aperture (53) is configured to discharge gas received from the compressor stage (14, 15) into the cooling duct (61, 62). The aerodynamic structure (900) is configured to generate a plurality of vortex pairs (902, 904) downstream of the aperture (53) within a flow of gas conveyed through the cooling duct (61, 62) along a bulk flow direction (202).

## Description

This disclosure relates to gas turbine engines, in particular gas turbine engines comprising an ejector.

Gas turbine engines may require compressor bleed valves to release pressure from compressor stages within the gas turbine engine core. In some gas turbine engines, compressor bleed air is exhausted through outlets within an outer casing of the core into the bypass duct of the engine. In a typical arrangement, a compressor bleed valve is provided in the compressor casing (or inner core casing) and ducted to an aperture in the outer casing. Such arrangements require a reinforced aperture in the outer casing, a seal and a seal land, all of which add weight to the gas turbine engine core. Additionally, exhausting compressor bleed air into the bypass duct risks thermal damage to the nacelle.

Some gas turbine engines comprise cooling systems mounted to the engine core. In some cases, these cooling systems comprise an air-to-oil heat exchanger together with inlets and outlets which open into the inner bypass duct to respectively receive air from the inner bypass duct for cooling and eject the heated air back into the inner bypass duct. In some cases, a number of such cooling systems are mounted on the engine core. Accordingly, the space available for bleed air exhausts is reduced.

The present invention has been devised with the foregoing in mind.

According to a first aspect there is provided a gas turbine engine comprising: a bypass duct; a compressor stage; a cooling duct having an inlet which opens into the bypass duct; and an ejector extending continuously through the cooling duct along an extension direction. The ejector includes: an aperture configured to discharge gas received from the compressor stage into the cooling duct; and an aerodynamic structure configured to generate a plurality of vortex pairs downstream of the aperture within a flow of gas conveyed through the cooling duct along a bulk flow direction.

In an embodiment, each of the plurality of vortex pairs is a counter-rotating vortex pair.

In an embodiment, the aerodynamic structure is configured to generate the plurality of vortex pairs downstream of the aperture within the flow of gas conveyed through the cooling duct such that the plurality of vortex pairs is distributed along the extension direction.

In an embodiment, the aerodynamic structure includes one or more indentations formed in a trailing edge of the ejector.

In an embodiment, the aerodynamic structure includes one or more turbulators disposed on a trailing portion of the ejector.

In an embodiment, the aperture is a slot having a major axis which is parallel to the extension direction. In an embodiment, the major axis of the slot continuously extends along a majority of an external dimension of the ejector in the extension direction.

In an embodiment, the aerodynamic structure includes an array of indentations formed in a side of the slot.

In an embodiment, the array of indentations has a root-to-tip amplitude extending in the bulk flow direction.

In an embodiment, the aerodynamic structure includes an additional array of indentations formed in the side of the slot. In an embodiment, the additional array of indentations has a root-to-tip amplitude extending in a direction mutually perpendicular to the extension direction and the bulk flow direction.

In an embodiment, the root-to-tip amplitude of the array of indentations is greater than an average height of the array of turbulators in a direction perpendicular to the bulk flow direction.

In an embodiment, the indentations of the array of indentations are equispaced along the extension direction.

In an embodiment, each indentation is a serration.

In an embodiment, the aerodynamic structure includes an array of turbulators located adjacent to the array of indentations.

In an embodiment, a spacing between the indentations along the extension direction is equal to a spacing between the turbulators along the extension direction.

In an embodiment, the turbulators are equispaced along the extension direction.

In an embodiment, each turbulator has an external profile which includes a chevron in a plane in which the bulk flow direction lies. In an embodiment, a distalmost point from the slot of each chevron is aligned with a tip of one of the serrations along the extension direction.

In an embodiment, each turbulator protrudes from an external surface of the ejector in a direction perpendicular to the bulk flow direction.

In an embodiment, the gas turbine engine comprises a heat exchanger disposed upstream of the ejector within the cooling duct.

In an embodiment, the array of indentations is a first array of indentations formed in a first side of the slot. In an embodiment, the aerodynamic structure further includes a second array of indentations formed in a second side of the slot.

In an embodiment, each indentation in the first array of indentations is aligned with a corresponding indentation in the second array of indentations along the extension direction. In an embodiment, the second array of indentations has any of (e.g., all of) the features of the first array of indentations.

In an embodiment, the aerodynamic structure includes a second array of turbulators located adjacent to the second array of indentations. In an embodiment, the second array of turbulators has any of (e.g., all of) the features of the first array of turbulators.

According to a second aspect there is provided an aircraft comprising a gas turbine engine in accordance with the first aspect.

### BRIEF DESCRIPTION OF THE DRAWINGS

Embodiments will now be described by way of example only with reference to the accompanying drawings, in which:
FIG. 1 is a top view of an aircraft comprising an airframe and a gas turbine engine;
FIG. 2 is a sectional side view of a first example gas turbine engine;
FIG. 3 is a detailed sectional side view of the first example gas turbine engine of FIG. 2;
FIG. 4 is a partially cut-away view of a gearbox of the first example gas turbine engine of FIG. 2;
FIG. 5 is a sectional side view of a second example gas turbine engine, the second example gas turbine engine comprising a cooling system;
FIG. 6 shows a perspective view of the cooling system within the second example gas turbine engine of FIG. 5;
FIG. 7 shows a cross sectional side view of the cooling system of FIGs. 5 and 6;
FIGs. 8 to 10 show various views of a first example ejector suitable for use in the cooling system shown by FIGs. 5 to 7;
FIG. 11 shows a second example ejector suitable for use in the cooling system shown by FIGs. 5 to 7; and
FIG. 12 shows a third example ejector suitable for use in the cooling system shown by FIGs. 5 to 7.

### DETAILED DESCRIPTION

### Aircraft

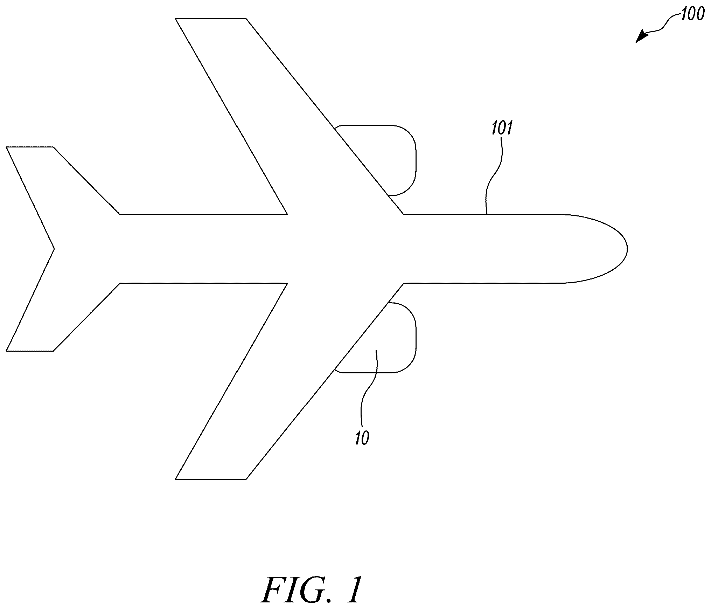

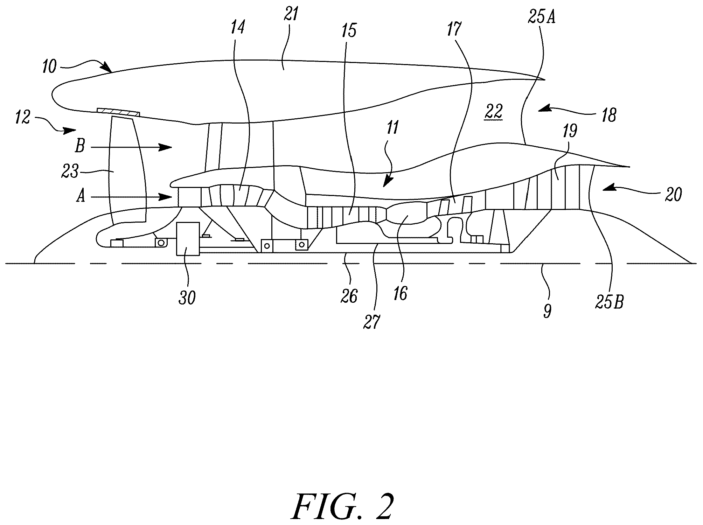

FIG. 1 shows a simplified and schematic view of an aircraft 100 comprising an airframe 101 and a gas turbine engine 10. The gas turbine engine 10 may be in accordance with the gas turbine engines 10 described below with reference to FIGs. 2 to 12.

### Gas turbine engine

FIG. 2 shows a first example gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor stage 14, a high-pressure compressor stage 15, combustion equipment 16, a high-pressure turbine stage 17, a low pressure turbine stage 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine stage 19 via a shaft 26 and an epicyclic gearbox 30.

In use, the core airflow A is accelerated and compressed by the low pressure compressor stage 14 and directed into the high pressure compressor stage 15 where further compression takes place. The compressed air exhausted from the high pressure compressor stage 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine stage 17 drives the high pressure compressor stage 15 by a suitable interconnecting shaft 27. The fan 23 generally provides the majority of the propulsive thrust. The epicyclic gearbox 30 is a reduction gearbox.

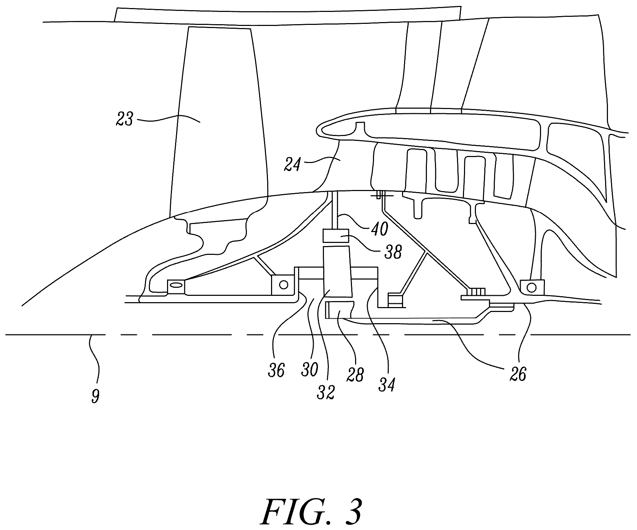

FIG. 3 shows a detailed (e.g., close-up) sectional side view of an upstream portion of the first example gas turbine engine. The low pressure turbine stage 19 (see FIG. 2) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

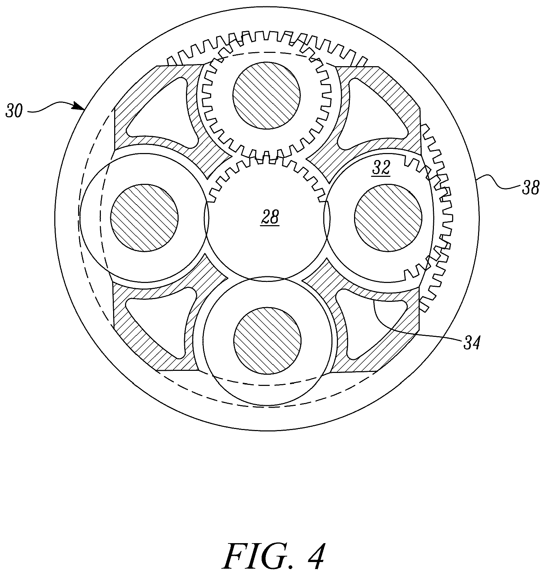

The epicyclic gearbox 30 is shown by way of example in greater detail in FIG. 4. Each of the sun gear 28, planet gears 32 and ring gear 38 comprise teeth about their periphery to intermesh with the other gears. However, for clarity only exemplary portions of the teeth are illustrated in FIG. 4. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in FIGs. 3 and 4 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in FIGs. 3 and 4 is by way of example only, and various alternatives are envisaged by the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the example shown by FIG. 3) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of FIG. 3. For example, where the gearbox 30 has a star arrangement (described above), the skilled person would readily understand that the arrangement of output and support linkages and bearing locations would typically be different to that shown by way of example in FIG. 3.

Accordingly, the present disclosure extends to a gas turbine engine having any arrangement of gearbox styles (for example star, including compound star, or planetary), support structures, input and output shaft arrangement, and bearing locations. Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in FIG. 2 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in FIG. 2), and a circumferential direction (perpendicular to the page in the view of FIG. 2). The axial, radial and circumferential directions are mutually perpendicular.

The gas turbine engine disclosed herein comprises an engine core 11 comprising a compressor and a casing 25A separating the engine core 11 from the bypass airflow within the bypass duct 22. The first example gas turbine engine 10 further comprises a compressor bleed valve 50 in communication with a compressor stage 14, 15 and configured to release bleed air from the compressor stage 14,15 (i.e., compressor bleed air, or more simply bleed air). The gas turbine engine 10 also comprises a bleed air duct 51 connected to the compressor bleed valve 50 and configured to eject the compressor bleed air released by the compressor bleed valve 50 into an airflow at a location within the casing 25A. It will be understood that references to air or airflow(s) herein are not intended to refer to a strictly standard atmospheric definition of "air" (e.g. by constituent gas components), and thus should be understood as a broad reference to gas or gas flow(s), respectively.

The casing 25A may be a core outer casing, i.e. the outer surface of the casing 25A may interface directly with the bypass airflow within the bypass duct 22. "Within the casing" means within a volume enclosed by the casing. The engine core 11 may comprise a further casing 25B. The further casing 25B may be a core inner casing or compressor casing, e.g. surrounding the compressor. Accordingly, the air flow into which the bleed air is ejected may be within a space between the outside of the core inner casing 24 and the inside of the core outer casing 25A. The core inner casing 25B may extend also over other components within the core 11, for example, the combustion equipment 16 and the turbines 17, 19 as well as the compressors 14, 15.

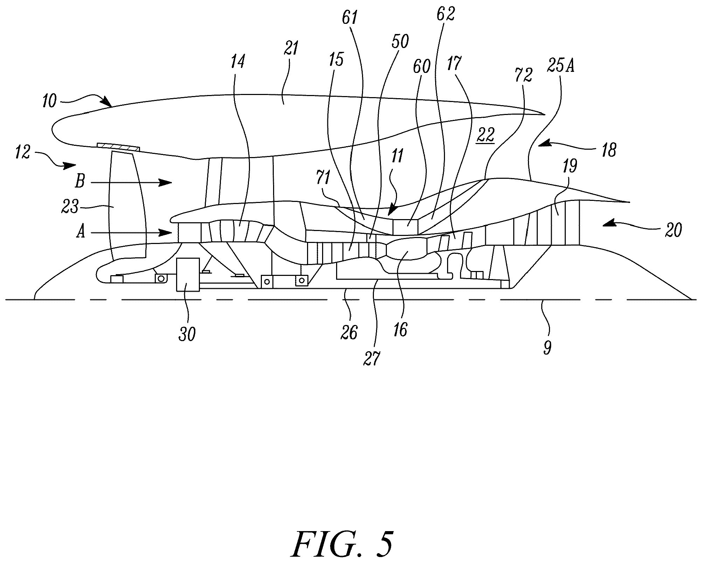

FIG. 5 shows a second example gas turbine engine 10. The second example gas turbine engine 10 is generally similar to the first example gas turbine engine 10 described above with reference to FIGs. 2 to 4, with like reference signs indicating common or similar features.

### Cooling system

However, the second example gas turbine engine 10 further comprises, within the casing 25A, a cooling system. The cooling system comprises a heat exchanger 60 (e.g. an air-to-oil heat exchanger), an inlet 61 (e.g., an inlet passageway 61) arranged upstream of the heat exchanger 61 and an outlet 62 (e.g., an outlet passageway 62) arranged downstream of the heat exchanger 60.

An upstream portion of the inlet passageway 61 is connected to the bypass duct 22 via an inlet aperture 71 in the casing 25A which opens into the bypass duct 22. Accordingly, a portion of the bypass airflow driven by the fan 23 enters the inlet passageway 61. A downstream portion of the outlet passageway 62 may be connected via another opening in the casing 25A to the bypass duct 22 to return heated air from the heat exchanger 60 to the bypass airflow. A downstream portion of the outlet passageway 62 is connected to the bypass duct 22 via an outlet aperture 72 which also opens into the bypass duct 22.

The inlet passageway 61 and the outlet passageway 62 together form a cooling duct 61, 62 for conveying a flow of air received from the bypass duct 22 therethrough along a bulk flow direction 202 and thus form a first circuit of the heat exchanger 60 for providing a cooling airflow. A second circuit of the heat exchanger 60 may be provided by ducts in which oil flows in use. The oil may be heated within the engine core 11 then flow into the heater exchange 60, where the oil-flow is cooled by the cooling airflow. In this way, the heat exchanger 60 may be an air-cooled oil-cooler (ACOC).

The airflow through the cooling system (i.e. through the heat exchanger 60, from the inlet passageway 61 to the outlet passageway 62) is primarily driven by the bypass airflow generated by the fan 23.

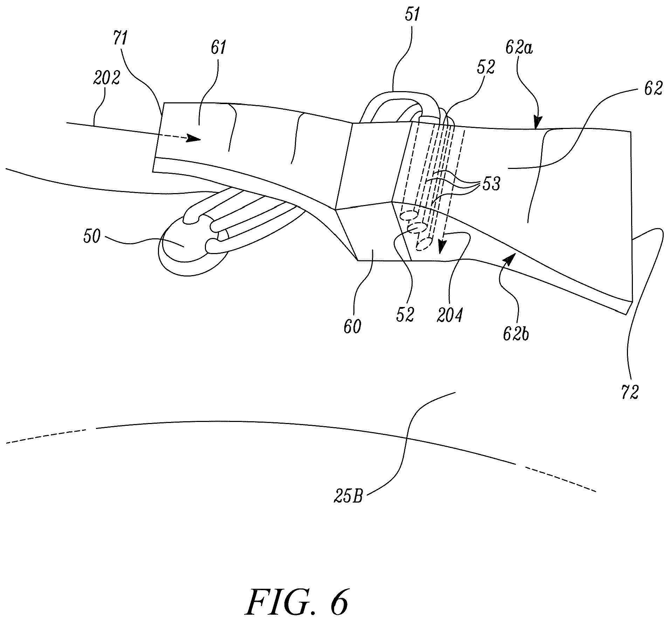

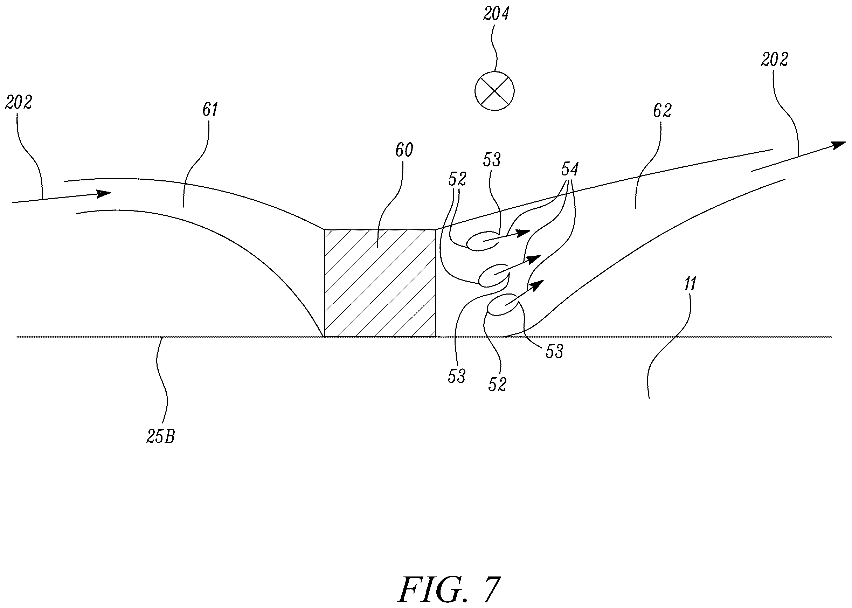

FIGs. 6 and 7 respectively show perspective and sectional side views of the cooling system connected via the bleed air duct 51 to the bleed air compressor 50 shown by FIG. 5. As shown in FIGs. 6 and 7, the bleed air duct 51 is provided with (e.g., comprises) an ejector 52 for ejecting (e.g., discharging) the bleed air into the outlet passageway 62. One bleed air duct 51 may comprise one corresponding ejector 52, as shown in FIG. 6. Multiple (e.g., three, as shown) ejectors 52 may be provided within the outlet passageway 62, together with corresponding bleed air ducts 51. However, it will be appreciated that alternative arrangements are possible. By way of example, a single bleed air duct may comprise multiple ejectors 52, e.g. connected via multiple branches of the bleed air duct 51. The multiple ejectors 52 may be substantially aligned in a direction perpendicular to the airflow through the outlet passageway 62. The arrows in FIG. 7 indicate the bulk flow direction 202 through the cooling system. The outlet passageway 62 is partially defined by opposing side walls 62a, 62b (as best shown by FIG. 6).

The ejectors 52 are provided at an end of the bleed air duct 51. Further, as shown in FIG. 6, the ejectors 52 are provided within the outlet passageway 62, extending substantially perpendicularly to the air flow through the outlet passageway 62. Accordingly, the heat exchanger 60 is disposed upstream of the ejectors 52 within the cooling duct 61, 62. The ejectors 52 extend continuously from one side of the outlet passageway 62 to an opposite side of the outlet passageway 62 along an extension direction 204. It can be seen that the bleed air enters the ejector at one end (i.e. an end connected to the rest of the bleed air duct 51). The extension direction 204 is perpendicular to the bulk flow direction 202.

The ejectors 52 each comprise an aperture 53 facing substantially in the bulk flow direction 202 through the outlet passageway 62. The apertures 53 may thus be configured to eject (e.g., discharge) the bleed air substantially in the bulk flow direction 202 and into the outlet passageway 62 (and this into the cooling duct formed 61, 62 by the inlet and outlet passageways). This is illustrated in FIG. 7 by the arrows 54 extending from the ejectors 52.

The ejected (e.g., discharged) bleed air has a high dynamic pressure (e.g., local flow speed) and a low static pressure compared to the surrounding cooling airflow within the outlet passageway 62. This relatively low static pressure acts to promote a favourable pressure drop across the heat exchanger 60 within the cooling duct 61, 62. This favourable pressure drop promotes the provision of cooling airflow to/past/through the heat exchanger 60 for cooling thereof (e.g., for cooling the oil-flow therein). This effect may be referred to as entrainment of the cooling airflow by the bleed air discharged by the ejector 52.

In addition to providing entrainment of the cooling airflow as described above, the bleed air duct 51 and the ejector 52 may be used for releasing air from the compressor stage(s) 14, 15 when at or near a stall condition to relieve aerodynamic strain on the compressor stages 14, 15 and/or for exhausting foreign-object-debris (FOD) which enters the compressor stages 14, 15 via gaps between adjacent blade roots of the propulsive fan 23. FOD may include water droplets which rapidly freeze to become ice flakes within the gas turbine engine 10 at certain operation points.

In a large high-bypass geared turbofan engine, such as that illustrated schematically by FIG. 5, the gaps between adjacent blade roots of the propulsive fan 23 may be relatively large and a rotational speed of the fan 23 may be relatively low, and thus a likelihood of ingression of FOD into the compressor stages 14, 15 may be elevated. Moreover, in such a large high-bypass geared turbofan engine, it may be that there is a risk of flow migration from the bypass duct 22 back through the bleed air duct 51 and into the compressor stages 14, 15 at critical operating points of the engine 10. The critical operating points of the engine 10 include when the engine 10 is at ground idle and when the engine 10 is at the top of a descent in the air. At these critical operating points, a pressure ratio between the compressor stages 14, 15 and the bypass duct 22 may reduce and tend towards unity. If so, at least one (or all) of the compressor stages 14, 15 may be operating at stall (e.g., be stalled). A direction of operating at stall in a large high-bypass geared turbofan engine may be relatively long. Under such conditions, FOD may not be able to be exhausted from the core 11 via the bleed air duct 51 and thus may be able to continue along the core 11 of the gas turbine engine 10 towards, and potentially cause damage to, sensitive downstream components.

In the example shown by FIGs. 6 and 7, the ejectors 52 have an aerofoil shape (e.g., a NACA aerofoil shape, as best shown by FIG. 7). Although not essential, having an aerofoil shape may minimise disruption to the airflow through the cooling system caused by the presence of the ejectors 52. Accordingly, the ejectors 52 are arranged such that the aerofoil shape is in alignment with the airflow through the outlet passageway 62.

### Ejectors

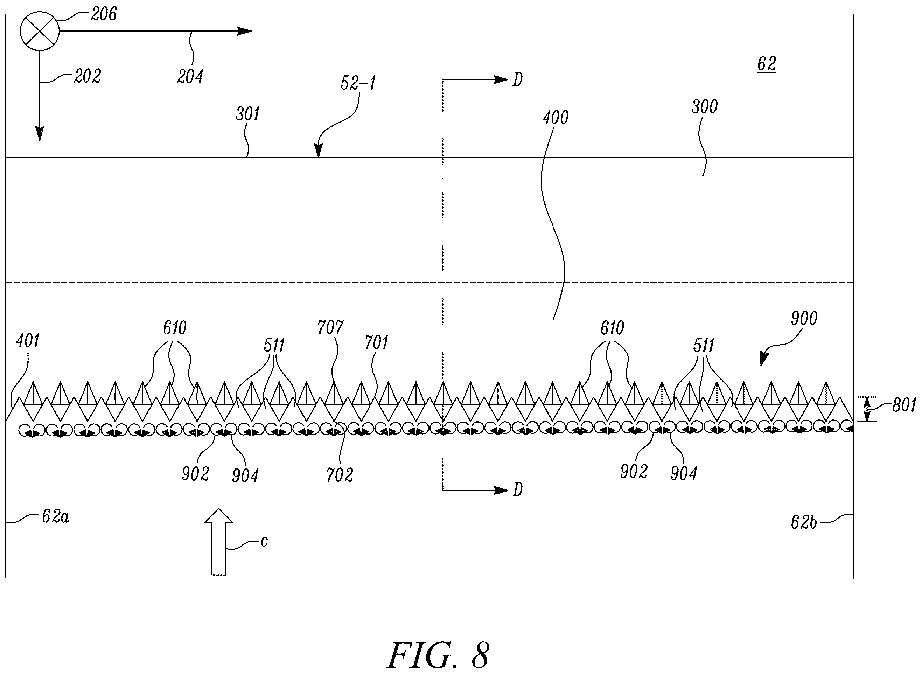

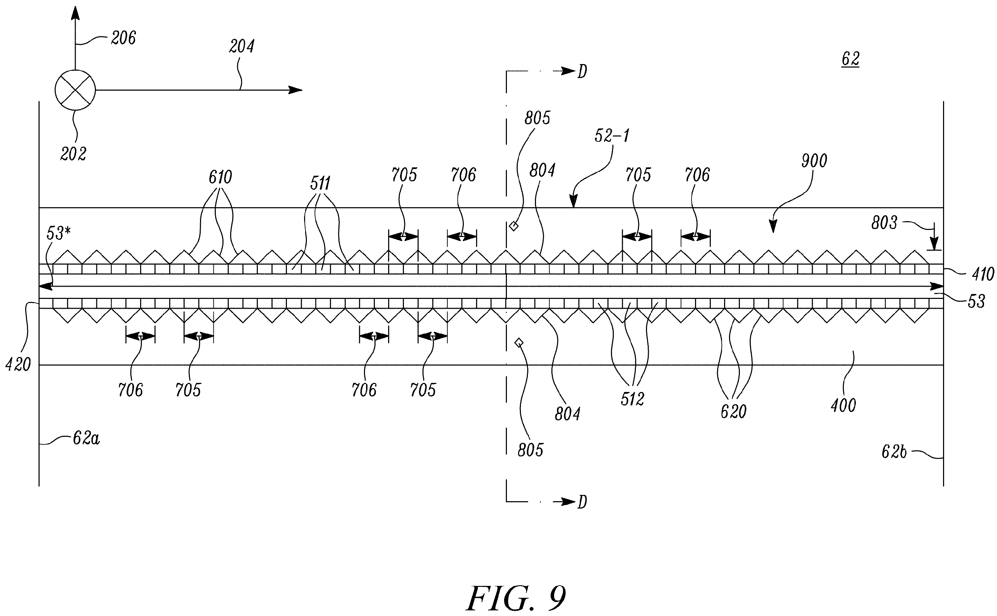

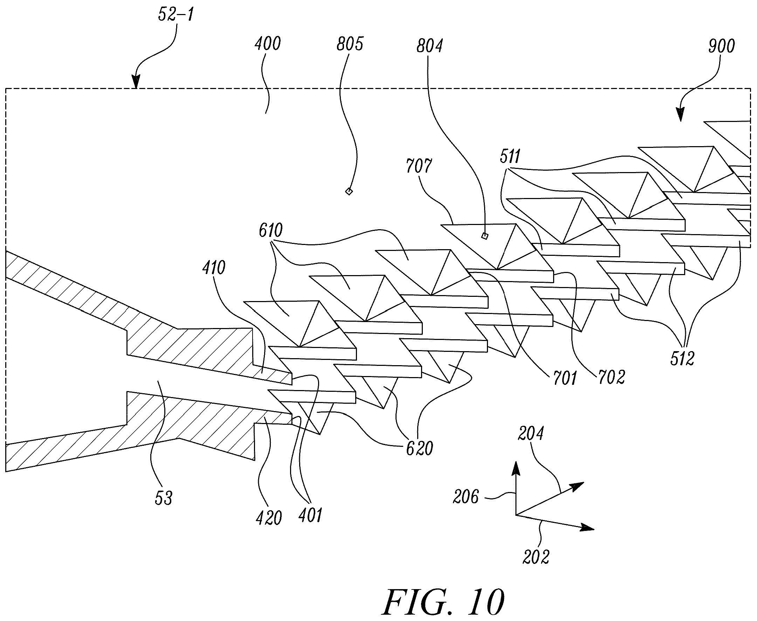

FIG. 8 shows a top view of a first example ejector 52-1 suitable for use as the ejector 52 in the cooling system shown by FIGs. 5 to 7. FIG. 9 shows an end view of the first example ejector 52-1 (i.e., a view in the direction indicated by arrow C on FIG. 8). FIG. 10 shows a detailed perspective cross-sectional view of the first example ejector 52-1 (i.e., through Section D-D as indicated on FIGs. 8 and 9). In each of FIGs. 8 to 10, a coordinate system is shown which indicates the extension direction 204, the bulk flow direction 202 and a height direction 206 which is mutually perpendicular to the extension direction 204 and the bulk flow direction 202.

In the first example ejector 52-1, the one or more apertures 53 of the ejector 52 is in the form of a slot 53 extending along the ejector 52. In particular, the slot 53 extends along the ejector 52 and has a major axis 53* which is parallel to the extension direction 204. The slot 53 is shown in FIG. 9 as extending along the entire length of the ejector 52 parallel to the extension direction 204 within the outlet passageway 62 (and thus within the cooling duct 61, 62). In this way, the major axis 53* of the slot 53 extends along a majority of an external dimension of the ejector 52 in the extension direction 204. However, other arrangements are possible. For example, the slot 53 may extend partially along the ejector 52, or multiple slots may be provided each extending partially along the ejector 52.

The ejector 52-1 comprises a leading portion 300 and a trailing portion 400. The leading portion 300 is a foremost portion of the ejector 52-1 with respect to the bulk flow direction 202 whereas the trailing portion 400 is an aftmost portion of the ejector 52-1 with respect to the bulk flow direction 202. In turn, the leading portion 300 includes a leading edge 301 and the trailing portion 400 includes a trailing edge 401. The leading edge 301 is a foremost edge of the ejector 52-1 and the trailing edge 401 is an aftmost edge of the ejector 52-1. The slot 53 extends along (e.g., is formed in) the trailing edge 401 of the ejector 52. Accordingly, the slot 53 has a first side 410 and a second side 420, each of which form part of the trailing edge 401.

A first array of indentations 511 is formed in the first side 410 of the slot 53. Similarly, a second array of indentations 512 is formed in the second side 420 of the slot 53. Moreover, a first array of turbulators 610 is disposed adjacent to the first array of indentations 511 on the trailing portion 400 and a second array of turbulators 620 is disposed adjacent to the second array of indentations 512 on the trailing portion 400. Each array of turbulators 610, 620 is disposed upstream of the respective adjacent array of indentations 511, 512 with respect to the bulk flow direction 202.

The first and second arrays of indentations 511, 512 are, in the first example ejector 52-1 geometrically identical (e.g., substantially geometrically identical) with one another and aligned with one another along the extension direction 204. Further, each indentation is in the form of a triangular sawtooth serration (as viewed from the direction illustrated by FIG. 8), such that each array of indentations 511, 512 may be referred to as an array of serrations 511, 512. All references to a serration 511, 512 or an array of serrations 511, 512 herein include more general references to an indentation 511, 512 or an array of indentations 511, 512, respectively. Yet further, in the first example ejector 52-1, each serration 511, 512 within each array of serrations 511, 512 is geometrically identical (e.g. substantially geometrically identical) to each other serration 511, 512 within the same array of serrations 511, 512.

In turn, each serration 511, 512 has a root 701 and a tip 702, as will be understood by those skilled in the art. As a result, each array of serrations 511, 512 is defined by (e.g., has) a root-to-tip amplitude 801, as will also be understood by those skilled in the art. In the first example ejector 52-1, the root-to-tip amplitude 801 of each array of serrations 511, 512 extends in (e.g., is parallel to) the bulk flow direction 202.

In a similar way, the first and second arrays of turbulators 610, 620 are, in the first example ejector 52-1 geometrically identical with one another and aligned with one another along the extension direction 204. Each turbulator 610, 620 has an external profile 804 which protrudes (e.g., diverges) from an external profile 805 of the trailing portion 400 of the ejector 52-1 along the height direction 206. In the first example ejector 52-1, each turbulator 610, 620 within each array of turbulators 610, 620 is geometrically identical (e.g. substantially geometrically identical) to each other turbulator 610, 620 within the same array of turbulators 610, 620. It follows that the external profile 804 of each turbulator 610, 620 is geometrically identical (e.g. substantially geometrically identical) to the external profile 804 of each other turbulator 610, 620 in the first example ejector 52-1. Moreover, in the first example ejector 52-1, the external profile 804 of each turbulator 610, 620 corresponds to the form of an irregular triangular-based pyramid.

As best shown by FIG. 9, a spacing 705 between adjacent serrations 511, 512 (e.g., the serration spacing 705 or serration pitch 705) is constant (e.g., substantially constant) throughout the extent of the ejector 52-1 along the extension direction 204. The serration spacing 705 in the first array of serrations 511 is equal (e.g., substantially equal) to the serration spacing 705 in the second array of serrations 512, such that each serration 511 in the first array of serrations 511 is aligned with a corresponding serration 512 in the second array of serrations 512 along the extension direction 204.

As also best shown by FIG. 9, a spacing 706 between adjacent turbulators 610, 620 (e.g., the turbulator spacing 706 or serration pitch 706) is constant (e.g., substantially constant) throughout the extent of the ejector 52-1 along the extension direction 204. The turbulator spacing 706 in the first array of turbulators 610 is equal (e.g., substantially equal) to the turbulator spacing 706 in the second array of turbulators 620. Accordingly, each turbulator 610 in the first array of turbulators 610 is aligned with a corresponding turbulator 620 in the second array of turbulators 620 along the extension direction 204.

Consequently, both the serrations 511, 512 and the turbulators 610, 620 are equispaced along the extension direction 204. Further, the serration spacing 705 is substantially equal to the turbulator spacing 706 throughout the extent of the ejector 52-1 along the extension direction 204.

In the first example ejector 52-1, the external profile 804 of each turbulator 610, 620 is triangular (e.g., substantially triangular) in a plane in which the bulk flow direction 202 lies. A distalmost point 707 of the external profile 804 (which corresponds to an apex of the triangular external profile 804) of each turbulator 610, 620 is aligned with the tip 702 of a corresponding serration 511, 512 in the respective adjacent array of serrations 511, 512. It is noted that a triangular external profile 804 inherently includes a chevron.

A height 803 of each turbulator 610, 620 is defined as a maximum dimension of the external profile 804 of the turbulator 610, 620 along the height direction 206. The root-to-tip amplitude 801 of each array of serrations 511, 512 is greater than the height 803 of the adjacent array of turbulators 610, 620. Because the external profile 804 of each turbulator 610, 620 is geometrically identical (e.g., substantially geometrically identical) to the external profile 804 of each other turbulator 610, 620 in the first example ejector 52-1, the height 803 of each turbulator 610, 620 is identical (e.g., substantially identical). However, other examples are envisaged in which the external profile 804 of each turbulator 610, 620 is not geometrically identical (e.g., not substantially geometrically identical) to the external profile 804 of each other turbulator 610, 620. If so, the root-to-tip amplitude 801 of each array of serrations 511, 512 may be greater than an average height (e.g., a mean average height) 803 of the adjacent array of turbulators 610, 620. Relative sizing of the serrations 511, 512 and the turbulators 610, 620 in this way may reduce a pressure drop in the cooling airflow across the ejector 52-1. This may be described as providing a "less draggy" ejector 52-1.

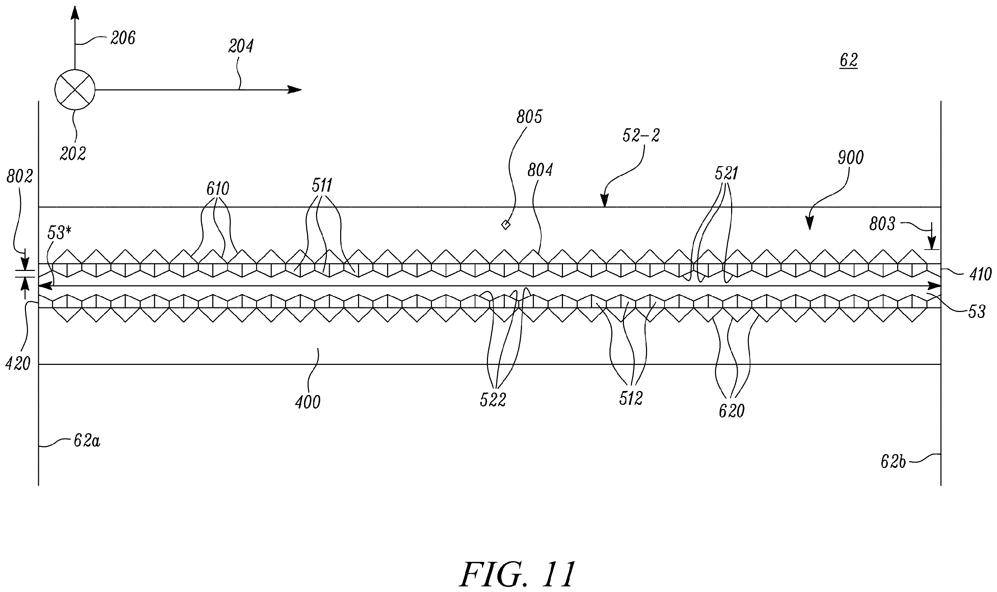

FIG. 11 shows an end view of a second example ejector 52-2 suitable for use as the ejector 52 in the cooling system shown by FIGs. 5 to 7. The second example ejector 52-2 is generally similar to the first example ejector 52-1 described above with reference to FIGs. 8 to 10, with like reference signs indicating common or similar features.

Compared to the first example ejector 52-1, the second example ejector 52-2 comprises an additional first array of serrations 521 formed in the first side 410 of the slot 53 as well as an additional second array of serrations 522 formed in the second side 420 of the slot 53. Each additional array of serrations 521, 522 is defined by (e.g., has) a root-to-tip amplitude 802 which extends in (e.g., is parallel to) the height direction 206.

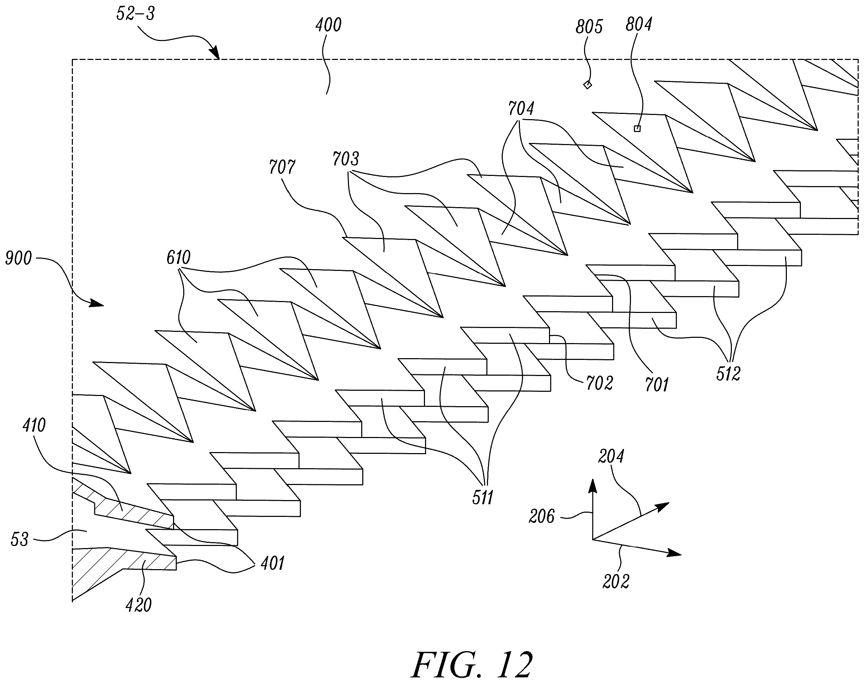

FIG. 12 shows a detailed perspective cross-sectional view of a third example ejector 52-3. The third example ejector 52-3 is generally similar to the first example ejector 52-1 described above with reference to FIGs. 8 to 10, with like reference signs indicating common or similar features. However, in the third example ejector 52-1, the external profile 804 of each turbulator 610, 620 corresponds to the form of a delta/arrowhead prism having a convex surface 703 and a concave surface 704, with the convex surface 703 being relatively upstream of the concave surface 704 with respect to the bulk flow direction 202.

In the third example ejector 52-3, the external profile 804 of each turbulator 610, 620 is in the form of an arrowhead in a plane in which the bulk flow direction 202 lies. A distalmost point 707 of the external profile 804 (which corresponds to an apex of the arrowhead external profile 804) of each turbulator 610, 620 is aligned with the tip 702 of a corresponding serration 511, 512 in the respective adjacent array of serrations 511, 512. It is noted that an arrowhead external profile 804 inherently includes a chevron.

In each of the example ejectors 52-1, 52-2, 52-3 described herein, the adjacent arrays of serrations 511, 512 and turbulators 610, 620 form an aerodynamic structure 900 which is configured to generate a plurality of vortex pairs 902, 904 within the cooling airflow conveyed along the cooling duct 61, 62 (e.g., within the outlet passageway 62) downstream of the slot 53 (as best shown by FIG. 8). Each vortex pair 902, 904 is a counter-rotating vortex pair 902, 904 that includes a clockwise rotating vortex 904 and an anti-clockwise rotating vortex 902. The plurality of vortex pairs 902, 904 are distributed continuously throughout the extent of the slot 53 along the extension direction 204.

Namely, the serrations 511, 512 and adjacent turbulators 610, 620 disrupt a boundary layer of the cooling airflow over the trailing portion 400 of the ejector 52-1, 52-2, 52-3. Thus, as the cooling airflow passes over the trailing edge 401, local flow separations occur which result in alternating zones of high and low static pressure (i.e., local static pressure differentials). These local static pressure differentials induce the formation of vortical structures which then coalesce to form the pairs of counter-rotating vortices 902, 904.

The inventor has found that the generation of the plurality of vortex pairs 902, 904 by the aerodynamic structure 900 of an ejector 52-1, 52-2, 52-3 incorporated within a gas turbine engine 10 in accordance with the present disclosure results in increased entrainment of the cooling airflow by the ejector 52-1, 52-2, 52-3 and a reduction in an acoustic signature of the ejector 52-1, 52-2, 52-3. Specifically, the inventor has found that, compared to a previously-considered ejector, up to a 50 percent increase in entrainment of the cooling airflow and up to a 30 decibel reduction in acoustic signature may be achieved. Yet more specifically, but without wishing to be bound by theory, the inventor has found that an ejector 52-1, 52-2, 52-3 incorporated within a gas turbine engine 10 in accordance with the present disclosure may achieve up to a 2% increase in a performance ratio (i.e., an entrainment ratio) defined as a ratio between an amount of air ejected (e.g., discharged) from the slot 53 and an amount of cooling airflow entrained by the ejector 52-1, 52-2, 52-3 at subcritical pressure ratios within the gas turbine engine 10.

Ejector 52-1, 52-2, 52-3 incorporated within a gas turbine engine 10 in accordance with the present disclosure therefore enable a greater influence over the cooling flow within the cooling duct 61, 62 over a greater range of operating points of the gas turbine engine 10. In other words, ejectors 52-1, 52-2, 52-3 encourage and promote flow along the bleed air duct 51 from the compressor stage(s) 14, 15 to the bypass duct 22 rather than vice versa. This may assist in mitigating stalling of the compressor stage(s) 14, 15 and exhausting FOD from the compressor stages 14, 15 across a broad range of operating conditions of the gas turbine engine 19.

Ejectors 52-1, 52-2, 52-3 in accordance with the present disclosure may be formed from a material comprising a metal. Ejectors 52-1, 52-2, 52-3 in accordance with the present disclosure may be manufacturing using an appropriate additive layer manufacturing process such as powder bed fusion or selective laser sintering. If so, the ejectors 52-1, 52-2, 52-3 may be integrally formed as a unibody (including the aerodynamic structure 900).

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein. The present disclosure is also relevant for land, aviation and marine applications in civil or military contexts.

## Claims

1. A gas turbine engine (10) comprising:
a bypass duct (22);
a compressor stage (14, 15);
a cooling duct (61, 62) having an inlet (71) which opens into the bypass duct (22); and
an ejector (52) extending continuously through the cooling duct (61, 62) along an extension direction (204), the ejector (52) including:
an aperture (53) configured to discharge gas received from the compressor stage (15, 15) into the cooling duct (61, 62); and
an aerodynamic structure (900) configured to generate a plurality of vortex pairs (902, 904) downstream of the aperture (53) within a flow of gas conveyed through the cooling duct (61, 62) along a bulk flow direction (202).

2. The gas turbine engine of claim 1, wherein each of the plurality of vortex pairs (902, 904) is a counter-rotating vortex pair.

3. The gas turbine engine of claim 1 or claim 2, wherein the aerodynamic structure (900) is configured to generate the plurality of vortex pairs (902, 904) downstream of the aperture (53) within the flow of gas conveyed through the cooling duct (61, 62) such that the plurality of vortex pairs (902, 904) are distributed along the extension direction (204).

4. The gas turbine engine of any preceding claim, wherein the aerodynamic structure (900) includes one or more indentations (511, 512) formed in a trailing edge (401) of the ejector (52).

5. The gas turbine engine of any preceding claim, wherein the aerodynamic structure (900) includes one or more turbulators (610, 620) disposed on a trailing portion (400) of the ejector (52).

6. The gas turbine engine of any preceding claim, wherein the aperture (53) is a slot having a major axis which is parallel to the extension direction (204).

7. The gas turbine engine of claim 6, wherein the aerodynamic structure (900) includes an array of indentations (511, 512) formed in a side (410, 420) of the slot, and optionally wherein the array of indentations (511, 512) has a root-to-tip amplitude (801) extending in the bulk flow direction (202).

8. The gas turbine engine of claim 7, wherein:
the aerodynamic structure (900) includes an additional array of indentations (521, 522) formed in the side (410. 420) of the slot;
the additional array of indentations (521, 522) has a root-to-tip amplitude (802) extending in a direction (206) mutually perpendicular to the extension direction (204) and the bulk flow direction (202); and/or
wherein the root-to-tip amplitude (801) of the array of indentations (511, 512) is greater than an average height (803) of the array of turbulators (610, 620) in a direction perpendicular to the bulk flow direction (202).

9. The gas turbine engine of any of claims 7 to 8, wherein the indentations (511, 512) of the array of indentations are equispaced along the extension direction (204).

10. The gas turbine engine of any of claims 7 to 9, wherein each indentation (511, 512, 521, 522) is a serration.

11. The gas turbine engine of any of claims 7 to 10, wherein the aerodynamic structure (900) includes an array of turbulators (610, 620) located adjacent to the array of indentations (511, 512, 521, 522), and optionally wherein the turbulators (610, 620) are equispaced along the extension direction (204).

12. The gas turbine engine of claim 11, wherein a spacing between the indentations (511, 512) along the extension direction (204) is equal to a spacing between the turbulators (610, 620) along the extension direction (204).

13. The gas turbine engine of any of claims 11 to 12, wherein:
each turbulator (610, 620) has an external profile which includes a chevron in a plane in which the bulk flow direction (202) lies; and
a distalmost point (707) from the slot of each chevron is aligned with a tip (702) of one of the serrations (511, 512) along the extension direction (204).

14. The gas turbine engine of any of claims 7 to 13, wherein:
the array of indentations is a first array of indentations (511) formed in a first side (410) of the slot, and the aerodynamic structure (900) further includes a second array of indentations (512) formed in a second side (420) of the slot; and optionally
wherein each indentation in the first array of indentations (511) is aligned with a corresponding indentation in the second array of indentations (512) along the extension direction (204).

15. The gas turbine engine of claim 14, wherein the aerodynamic structure (900) includes a second array of turbulators (620) located adjacent to the second array of indentations (522).
